(19) Europäisches Patentamt
European Patent Office
Office européen des brevets

(11) **EP 1 946 651 B1**

(12) **EUROPEAN PATENT SPECIFICATION**

(45) Date of publication and mention
of the grant of the patent:
**23.03.2011 Bulletin 2011/12**

(51) Int Cl.:
*A23K 1/18* (2006.01)   *A23K 1/16* (2006.01)
*A23K 1/175* (2006.01)

(21) Application number: **06811971.8**

(22) Date of filing: **18.10.2006**

(86) International application number:
**PCT/JP2006/320778**

(87) International publication number:
**WO 2007/046441 (26.04.2007 Gazette 2007/17)**

(54) **PET FOODS**

Haustierfutter

ALIMENTS POUR ANIMAUX DOMESTIQUES

(84) Designated Contracting States:
**DE FR GB**

(30) Priority: **18.10.2005 JP 2005302654**
**18.10.2005 JP 2005302653**
**18.10.2005 JP 2005302652**
**18.10.2005 JP 2005302651**

(43) Date of publication of application:
**23.07.2008 Bulletin 2008/30**

(73) Proprietor: **Kao Corporation**
**Chuo-ku**
**Tokyo 103-8210 (JP)**

(72) Inventors:
• **SHIBA, Tsutomu**
**Sumida-ku, Tokyo, 131-8501 (JP)**

• **UMEDA, Tomoshige**
**Sumida-ku, Tokyo, 131-8501 (JP)**
• **OTSUJI, Kazuya**
**Sumida-ku, Tokyo, 131-8501 (JP)**
• **BAN, Takeshi**
**Sumida-ku, Tokyo, 131-8501 (JP)**

(74) Representative: **HOFFMANN EITLE**
**Patent- und Rechtsanwälte**
**Arabellastraße 4**
**81925 München (DE)**

(56) References cited:
EP-A- 1 514 480     JP-A- 10 279 487
JP-A- 2004 269 458     JP-A- 2005 095 174
JP-A- 2005 204 659     US-A1- 2004 101 545

## EP 1 946 651 B1

### Description

### Field of the Invention

This invention relates to a pet food.

### Background Art of the Invention

The number of pet animals is increasing owing to a pet boom. Along with such an increase, a growing number of pet animals are suffering from diseases equivalent to human adult diseases, such as obesity, diabetes and liver diseases, due to aging, insufficient exercise, overnutrition and the like. In addition, obese dogs and obese cats are on the rise because of their disordered hormone balance caused by contraceptive surgery.

To prevent such obesity or weight gains, numerous pet foods have been developed. Examples include a pet food containing a bay leaf extract which is an amylase inhibitor (Patent Document 1), a pet food containing a lipase inhibitor such as hesperidin (Patent Document 2), and a pet food containing Grifola frondosa powder and/or a Grifola frondosa extract (Patent Document 3). While their application are not limited to pet food, there are also other technologies such as the one that improves lipid metabolism by cereal flour with amylose mixed at a high content (Patent Document 4) and the one that amylose-rich starch is incorporated at a predetermined amount in pet foods (Patent Document 5). There is also a technology characterized in that barley, corn and sorghum adjusted at a predetermined ratio are incorporated as cereal flour capable of controlling postprandial glycemic response (Patent Document 6).

There is also a pet food known for having the property that an oil or fat having a high unsaturated fatty acid content (Patent Document 7) or the like is mixed. There is also a technology intended to improve the long-term storage stability of pet foods in which in pursuit of anti-obesity effect, an oil or fat increased in the contents of diacylglycerol and unsaturated fatty acids is used and minerals are mixed at high concentrations (Patent Document 8).

A technology that uses lactic acid bacteria as probiotics for pets to improve their skin's immune function (Patent Document 9), a composition with an oligosaccharide mixed as probiotics to alleviate inflammation (Patent Document 10), and a method that combines a probiotic microorganism with fructo-oligosaccharide as a prebiotic (Patent Document 11) are proposed as well.

A pet dog or cat food source having a high content of diacylglycerols has been reported to reduce the weight of an overweight dog or cat consuming said food (Patent Document 12).

Furthermore, a pet food containing a carbohydrate that includes a high-amylose starch and an animal and/or vegetable protein and in which diacylglycerol is present in an amount up to 90 wt. % has been reported to have anti-obesity effects (Patent Document 13).

Patent Document 1: JP-A-05-192092

Patent Document 2: JP-A-09-187230

Patent Document 3: JP-A-08-038069

Patent Document 4: JP-A-10-279487

Patent Document 5: JP-A-2005-095174

Patent Document 6: JP-A-2002-510474

Patent Document 7: JP-A-06-217710

Patent Document 8: JP-A-2005-204659

Patent Document 9: JP-A-2004-510740

Patent Document 10: JP-A-2004-529910

Patent Document 11: JP-A-2003-509074

Patent Document 12: US 2004/101545 A1

Patent Document 13: EP 1514480 A

**Disclosure of the Invention**

The present invention provides a pet food containg (A) an oil or fat; (B) one or more carbohydrate sources selected from the group consisting of modified starch, barley, sorghum, corn and high-amylose starch; and (C) a malto-oligosaccharide and lactic acid bacteria, wherein a content of diacylglycerol in a whole oil or fat is 20 wt% or higher.

**Brief Description of the Drawings**

[FIG. 1] A diagram illustrating variations in blood neutral fat level after feeding pet foods.
[FIG. 2] A diagram illustrating variations in blood insulin level after feeding pet foods.
[FIG. 3] A diagram illustrating the results of coat gloss and overall evaluations after feeding the test diets shown in Table 8.

**Detailed Description of the Invention**

The pet foods according to the above-described conventional technologies, however, have the possibility that their ingestion capacity could decrease and the smell of feces could change, because of the special substances contained therein.

An object of the present invention is to provide a pet food that is excellent in the preventing or controlling effect on obesity, is not reduced in ingestion capacity, and does not affect the conditions of feces.

The present inventors, therefore, conducted an investigation to obtain a pet food excellent in obesity-preventing effect. It has been known that insulin is a hormone which acts to store blood neutral fat as body fat, and that an increase in blood sugar level promotes the secretion of insulin. Described specifically, by a postprandial increase in blood neutral fat level and a concurrent increase in blood sugar level, insulin is secreted so that blood neutral fat accumulates as body fat. Accordingly, the accumulation of body fat can be more effectively controlled by inhibiting an increase in the concentration of neutral fat as a causative and controlling the secretion of insulin. A further investigation was, therefore, conducted for a material that can inhibit increases in their concentrations. As a result, it has been found that a pet food equipped with excellent anti-obesity effect can be obtained by making combined use of diacylglycerol, as a substance for inhibiting an increase in neutral fat, and a specific carbohydrate source such as modified starch, as an agent for inhibiting an increase in blood sugar level.

As the pet food according to the present invention is excellent in the preventing or controlling effect on obesity and weight gain suppressing effect for pets and is good in ingestion capacity, it does not impair the nutrition balance. In addition, the conditions and smell of pet feces are not different compared with those of feces from usual diets.

As the oil or fat (A) for use in the pet food according to the present invention, safflower oil, olive oil, cottonseed oil, corn oil, rapeseed oil, soybean oil, palm oil, sunflower oil, linseed oil, sesame oil, chicken oil, lard, beef tallow, fish oil, milk fat or the like can be mentioned. The oil or fat is not limited to that mixed as an oil or fat, but also includes oil or fat contained in other plant materials or animal materials if any. From the standpoints of obesity preventing effect and ingestion capacity, oil or fat may be contained in an amount of preferably from 1 to 50 wt% (hereinafter simply described "%"), more preferably from 3 to 40%, still more preferably from 5 to 30% in the pet food according to the present invention.

The pet food according to the present invention needs to contain diacylglycerol in an amount of 20% or more in the whole oil or fat. From the standpoints of the inhibition of a postprandial increase in blood neutral fat level and anti-obesity effect, diacylglycerol may be contained in an amount of preferably from 20 to 85%, more preferably from 25 to 50% in the whole oil or fat.

From the standpoints of the inhibition of a postprandial increase in blood neutral fat level and anti-obesity effect, diacylglycerol may contain unsaturated fatty acids (UFA) in an amount of preferably from 80 to 100%, more preferably from 90 to 100%, still more preferably from 93 to 100%, even more preferably from 93 to 98%, still even more preferably from 94 to 98% based on its constituent fatty acids, It is to be noted that the carbon numbers of these unsaturated fatty acids may range preferably from 14 to 24, more preferably from 16 to 22.

Among the fatty acids which make up diacylglycerol, the content of oleic acid may be preferably from 20 to 65%, more preferably from 25 to 60%, still more preferably from 30 to 50%, even more preferably from 30 to 45% from the standpoints of anti-obesity effect and ingestion capacity.

Among the fatty acids which make up diacylglycerol, the content of linoleic acid may be preferably from 15 to 65%, more preferably from 20 to 60%, still more preferably from 30 to 55%, even more preferably from 35 to 50% from the standpoints of anti-obesity effect and ingestion capacity. Further, the content weight ratio of linoleic acid/oleic acid in diacylglycerol may be preferably from 0.01 to 2.0, more preferably from 0.1 to 1.8, still more preferably from 0.3 to 1.7 from the standpoints of oxidation stability and anti-obesity effect.

Among the fatty acids which make up diacylglycerol, the content of linolenic acid may be preferably lower than 15%, more preferably from 0 to 13%, still more preferably from 1 to 10%, even more preferably from 2 to 9% from the standpoints of anti-obesity effect, ingestion capacity and oxidation stability. Linolenic acid is known to include $\alpha$-linolenic acid and $\gamma$-linolenic acid as isomers, with $\alpha$-linolenic acid being preferred.

Among the fatty acids which make up diacylglycerol, the content of saturated fatty acids (SFA) may be preferably lower than 20%, more preferably from 0 to 10%, still more preferably from 0 to 7%, even more preferably from 2 to 7%, still even more preferably from 2 to 6% from the standpoints of anti-obesity effect, ingestion capacity and oxidation stability. As saturated fatty acids, preferred are those having from 14 to 24 carbon atoms, with those having from 16 to 22 carbon atoms being more preferred. Palmitic acid and stearic acid are still more preferred.

Among the fatty acids which make up diacylglycerol, the content of fatty acids having 12 and fewer carbon atoms is preferably 5% or lower, more preferably from 0 to 2%, still more preferably from 0 to 1%, even more preferably substantially 0% from the standpoints of flavor and ingestion capacity. The remaining constituent fatty acids are those containing preferably from 14 to 24 carbon atoms, more preferably from 16 to 22 carbon atoms.

From the standpoints of the inhibition of a postprandial increase in blood neutral fat level and anti-obesity effect, it is preferred to use diacylglycerol in which the percentage of 1,3-diacylglycerol is preferably 50% or higher, more preferably from 52 to 100%, still more preferably from 54 to 90%, even more preferably from 56 to 80%.

Diacylglycerol may contain those contained in the above-mentioned natural oils and fats, but the mixing of one obtained by esterification between fatty acids derived from the above-mentioned oil or fat and glycerin, transesterification between an oil or fat and glycerin, or the like is preferred to adjust the content of diacylglycerol. Diacylglycerol can also be obtained by a chemical reaction making use of an alkali catalyst or the like, but one obtained by a reaction under mild conditions with an enzyme such as 1,3-selective lipase is preferred from the standpoints of oxidation stability and taste acceptability.

In the oil or fat contained in the pet food according to the present invention, triacylglycerol may also be contained, and some monoacylglycerol, free fatty acids and the like may be contained further. They can be those contained in the above-mentioned natural oil or fat, or those contained in a produced, diacylglycerol-containing oil or fat or a mixed plant or animal material.

The pet food according to the present invention contains one or more of carbohydrate sources (B) selected from the group consisting of modified starch, barley, sorghum, corn and high-amylose starch.

The term "modified starch" in the pet food according to the present invention means one obtained by applying chemical treatment, chemical modification or the like to usual starch, for example, waxy corn starch, corn starch, wheat starch, rice starch, glutinous rice starch, potato starch, ocarina starch, tapioca starch, sago starch, or the like. The content of the modified starch may be preferably 3% or higher, more preferably from 3 to 30%, still more preferably from 3 to 20% in a carbohydrate source from the standpoints of economy, the inhibition of a postprandial rise in blood sugar level, the inhibition of a postprandial rise in insulin level, anti-obesity effect, ingestion capacity and the conditions of feces.

Specifically, acetylated starch, octenylsuccinated starch, hydroxypropylated starch, acetylated distarch adipate, acetylated distarch phosphate, starch acetate, oxidized starch, phosphated distarch phosphate, phosphorylated phosphate, distarch phosphate, hydroxypropylated distarch phosphate and the like, with acetylated starch, octenylsuccinated starch and hydroxypropylated starch being preferred for the possibility of their production from starch through simple steps with high purity at relative low cost and from the standpoints of the inhibition of a postprandial rise in blood sugar level, the inhibition of a postprandial rise in insulin level, anti-obesity effect, ingestion capacity and safety.

Acetylated starch can be obtained by acetylating starch or modified starch in a usual manner. Specifically, it can be obtained by reacting acetic anhydride or vinyl acetate with starch. As an alternative, a commercial product such as "Z-700" (derived from tapioca, acetylated, Nippon Starch Co., Ltd.), "MT-01B" (derived from tapioca, acetylated, Nihon Shokuhin Kako Co., Ltd.), "ADIX-H" (derived from waxy corn, acetylated, Nihon Shokuhin Kako Co., Ltd.) or "MAPS #449" (derived from waxy corn, acetylated, Nihon Shokuhin Kako Co., Ltd.) can also be used. As the degree of acetylation, the acetyl value (the number of acetyl groups per residual group of anhydroglucose in starch) may be preferably from 0.001 to 1, more preferably from 0.005 to 0.5, still more preferably from 0.01 to 0.1.

Octenylsuccinated starch can be obtained by octenylsuccinating starch or modified starch in a usual manner. Specifically, it can be obtained by reacting octenyl succinate anhydride with starch. As an alternative, a commercial product such as "AMYCOL NYUKA" (derived from tapioca, octenylsuccinated, Nippon Starch Co., Ltd.) can also be used. As the degree of octenylsuccination, the octenylsuccinic acid value (the number of octenylsuccinyl groups per residual group of anhydroglucose in starch) may be preferably from 0.001 to 1, more preferably from 0.005 to 0.5, still more preferably from 0.01 to 0.1.

Hydroxypropylated starch can be obtained by hydroxypropylating starch or modified starch in a usual manner. Specifically, it can be obtained by reacting propylene oxide with starch. As an alternative, a commercial product such as "NATIONAL FRIGEX" (derived from tapioca, National Starch and Chemical Company), "NATIONAL 1658" (derived from corn, National Starch and Chemical Company), "THERMFLOW" (derived from waxy corn, National Starch and Chemical Company) or "THERMTEX" (derived from waxy corn, National Starch and Chemical Company) can also be used. As the degree of hydroxypropylation, the degree of substitution (the number of hydroxypropyl groups per residual group of anhydroglucose in starch) maybe preferably from 0.001 to 1, more preferably from 0.05 to 0.5, still more preferably from 0.1 to 0.3.

Further, the above-described modified starches may also be used as different modified starches by combining other modification treatments, respectively. As modification treatments which can be combined, esterification with acetic acid or phosphoric acid, hydroxypropylation, etherification by hydroxypropylation or carboxymethyletherification, crosslinking treatment making use of a commonly-employed crosslinking agent such as a trimetaphosphate, hexametaphosphate, phosphorus oxychloride, adipic acid or epichlorohydrin, oxidation, acid treatment, bleaching, mist heat treatment, heat treatment, enzymatic treatment, or the like can be mentioned. These treatments may be applied either singly or in combination. Among these, esterification is preferred, with phosphorylation being preferred, and phosphoric acid crosslinking treatment being more preferred. As the degree of phosphorylation, the content of bound phosphorus can be in a range of from 0.0001 to 2%, with a range of from 0. 0001 to 0.5% being preferred, and a range of from 0. 0001 to 0.2% being more preferred, from the standpoint of ingestion capacity or the like.

Barley can be either two-rowed barley or six-rowed barley, and can also include their mixture employed for feed. Barley may be contained in an amount of preferably 5% or more, more preferably from 5 to 80%, still more preferably from 10 to 70% in the carbohydrate source from the standpoints of economy, the inhibition of a postprandial rise in blood sugar level, the inhibition of a postprandial rise in insulin level, anti-obesity effect, ingestion capacity and the conditions of feces.

The term "sorghum" means a gramineous plant, and includes, in addition to one also called "Sorghum nervosum BESS", bloom corn also called "Sorghum vulgare Pers. var. technicum Jav.", sweet sorghum also called "Sorghum saccharatum Pers.", grain sorghum also called "milo", and the like. Sorghummaybe contained in an amount of preferably 3% or more, preferably from 3 to 60%, more preferably from 5 to 50% in the carbohydrate source from the standpoints of economy, the inhibition of a postprandial rise in blood sugar level, the inhibition of a postprandial rise in insulin level, anti-obesity effect, ingestion capacity and the conditions of feces.

The term "corn" means general *mais,* and also includes not only corn flour obtained by grinding it but also corn starch. Corn may be contained in an amount of preferably 3% or more, more preferably from 3 to 60%, still more preferably from 5 to 50% in the carbohydrate source from the standpoints of economy, anti-obesity effect, ingestion capacity and the conditions of feces.

The term "high-amylose starch" means starch the amylose content of which ranges from 40 to 99%, and specifically, high-amylose corn starch, Glacier AC38 as a six-rowed barley and su2 *mais* can be mentioned. As commercial products, high-amylose corn starches such as "HIGH-AMYLOSE CORN STARCH AMYLOMAIZE V" (amylose content: 50 to 60%), "AMYLOMAIZE VI" (amylose content: 60 to 70%) and "AMYLOMAIZE VII" (amylose content: 70 to 80%), all of which are products of Nihon Shokuhin Kako Co., Ltd., and "FIBOSE" (amylose content: approx. 70%), product of Nippon Starch Co., Ltd., can be mentioned.

Such high-amylose starch may be contained in an amount of preferably 3% or more, more preferably from 3 to 30%, still more preferably from 3 to 20% from the standpoints of economy, the inhibition of a postprandial rise in blood sugar level, the inhibition of a postprandial rise in insulin level, anti-obesity effect, ingestion capacity and the conditions of feces.

In the pet food according to the present invention, it is preferred, from the standpoints of the inhibition of a postprandial rise in blood sugar level, the inhibition of a postprandial rise in insulin level, obesity preventing or controlling effect, weight gain suppressing effect and ingestion capacity, to make use of one or two of the memberes selected from modified starch, high-amylose starch, corn, barley and sorghum.

In the pet food according to the present invention, the inclusion of barley, sorghum and/or high-amylose starch as the carbohydrate source is preferred from the standpoints of anti-obesity, ingestion capacity and the application of no influence to the conditions of feces. In this case, the content of barley may preferably be more than 5-fold weight relative to sorghum or high-amylose starch, respectively. Described specifically, their weight ratios may preferably be (barley/sorghum)>5 and/or (barley/high-amylose starch)>5. More preferred weight ratios may be (barley/sorghum)>5.2 and/or (barley/high-amylose starch) ≥5.2, and still more preferred weight ratios may be (barley/sorghum)>5.5 and/or (barley/high-amylose starch)≥5.5.

Inclusion of (C) a malto-oligosaccharide and lactic acid bacteria in the pet food according to the present invention can bring about advantageous effects and make pets' appearance, such as coat gloss, healthier and more beautiful.

The malto-oligosaccharide usable in the pet food according to the present invention is an oligosaccharide with from 3 to 10 glucose molecules linearly polymerized through $\alpha$-1,4-glycosidic linkages. Maltose, which consists of two glucose molecules linked together, naturally exists as a principal ingredient of malt starch syrup, and malto-oligosaccharides each consisting of three or more glucose molecules linked together are also contained in starch syrup. Among these malto-oligosaccharides, those each having a glucose polymerization degree of from 4 to 7, that is, maltotetraose, maltopentaose and maltohexose are preferred from the standpoint of improving pets' appearance such as coat gloss.

Although no particular limitation is imposed on the production process of the malto-oligosaccharide, it can be produced from starch or the like, for example, by a process that effects partial hydrolysis with α-amylase or the like, a process that makes use of a malto-oligosaccharide-producing amylase of bacteria origin which specifically forms a malto-oligosaccharide of specific polymerization degree, or a like process. It may be necessary to purify such a malto-oligosaccharide depending on the manner of its use, its application purpose, is preparation form and any other objectives. It is preferred to use a malto-oligosaccharide of as high purity as possible in view of its dose when administered orally, its effects or the like. The content of the malto-oligosaccharide in the whole saccharide may be preferably 30% or higher, more preferably 50% or higher, still more preferably 80% or higher from the standpoint of improving pets' appearance such as coat gloss. From a similar standpoint, the content of malto-oligosaccharides of 4 to 7 saccharide polymerization degrees in the whole saccharide may be preferably 20%, more preferably 30%, still more preferably 50%.

The malto-oligosaccharide obtained as described above is generally in the form of a colorless clear liquid or white powder. The malto-oligosaccharide is a glucide, which is odorless, is excellent in palate, has mild sweetness, and is also superb in acid resistance and heat resistance. Further, it is also excellent in safety as demonstrated by its $LD_{50}$ of 20 g/kg or more for rats. The malto-oligosaccharide can, therefore, be mixed in the pet food as it is. The amount in which the malto-oligosaccharide is mixed in the pet food differs depending on the age and the like of each pet, but in terms of the malto-oligosaccharide, may be preferably from 10 to 3,000 mg, more preferably from 100 to 1,000 mg, both per kg-body weight and day. From the standpoint of improving pets' appearance such as coat gloss, it is preferred to ingest the above-described amount in one to several portions in a day.

The lactic acid bacteria usable in the pet food according to the present invention may preferably be one usable as probiotics. In other word, it is lactic acid bacteria that can improve the balance of enterobacteria in pets. Specifically, Lactobacillus acidophilus, Lactobacillus thermophilus, Lactobacillus bulgaricus, Lactobacillus casei, Enterococcus feacalis, Bifidobacterium longum, Bifidobacterium breve, and the like can be mentioned. It is preferred to use one or more lactic acid bacteria selected from these specific bacteria. Among these, the Enterococcus species may be more preferably incorporated from the standpoint of improving pets' appearance such as coat gloss. It is to be noted that lactic acid bacteria useable as probiotics can be either viable bacteria or killed bacteria.

The lactic acid bacteria may be contained as much as $10^8$ cells/100 g or more, more preferably $10^9$ cells/100 g or more, $10^{10}$ cells/100 g or more from the standpoint of improving pets' appearance such as coat gloss.

It is preferred, from the standpoint of maintaining the skin hair healthy, that the pet food contain 8% or more of an oil or fat which in turn contains ω-3 unsaturated fatty acids in an amount of 2.5% or more, preferably 3% or more, more preferably 5% or more in the constituent fatty acids of the oil or fat. The content of ω-3 unsaturated fatty acids may be preferably from 2.5 to 12%, more preferably from 3 to 10%, still more preferably from 5 to 10%. The content of such an oil or fat in the pet food may be preferably from 8 to 20%, more preferably from 9 to 18%.

The pet food according to the present invention may preferably contain (A1) from 3 to 50 wt% of an oil or fat in which the content of unsaturated fatty acids having two or more double bonds is 20 % or higher in its constituent fatty acids, (D) a naturally-occurring antioxidant or a derivative thereof, and (E) minerals containing iron ions and copper ions in amounts satisfying the following equation (1) :

$$\text{[Cu (mg/kg)]} + \text{[Fe (mg/kg)]}/10 \leq 80 \ (1)$$

because the resulting pet food is provided with excellent long-term storage stability despite the inclusion of the minerals in sufficient amounts. The thus-obtained pet food is excellent in long-term storage stability so that, even when stored over a long term, its smell does not change and its taste acceptability is not reduced. Moreover, this pet food is excellent in anti-obesity effect because the content of unsaturated fatty acids is high and the content of diacylglycerol is also high.

In the oil or fat (A1) used as described above, the content of unsaturated fatty acids containing two or more double bonds is 20% or higher in the constituent fatty acids of the oil or fat, and the content of diacylglycerol in the oil or fat is 20% or higher. Such diacylglycerol can be obtained, for example, by (1) subjecting an oil or fat, which is selected from oils or fats containing 20% or more of unsaturated fatty acids having two or more double bonds in their constituent fatty acids (e.g., safflower oil, olive oil, cottonseed oil, corn oil, rapeseed oil, soybean oil, palm oil, sunflower oil, linseed oil, sesame oil; lard, beef tallow, fish oil, milk fat; and their fractionated oils, randomly esterified oils and transesterified oils), and glycerin to transesterification in the presence of the hydroxide of an alkali metal or alkaline earth metal, or (2) an esterification reaction between a fatty acid mixture, which has been derived from these oils or fats and contains 20% or more of the above-mentioned unsaturated fatty acids, and glycerin. At this time, two or more oils or fats may be mixed together. These reactions may preferably be conducted under mild conditions with an enzyme such as 1,3-selective lipase from the standpoints of oxidation stability and taste acceptability, although they can also be conducted as chemical reactions making use of such an alkali catalyst or the like as described above.

In the pet food according to the present invention, the content of unsaturated fatty acids, which have two or more double bonds, in the constituent fatty acids of the oil or fat (A1) may be preferably 20% or higher, more preferably from 20 to 90%, still more preferably from 23 to 80%, even more preferably from 25 to 70% from the standpoints of anti-obesity effect and the healthiness of the skin and coat. As the unsaturated fatty acids containing two or more double bonds, unsaturated fatty acids having from 18 to 14 carbon atoms, such as , linoleic acid, linolenic acid, EPA, DHA and arachidonic acid can be mentioned.

As the fatty acids that make up the oil or fat (A1) usable in the present invention, unsaturated fatty acids containing one double bond and saturated fatty acids can be mentioned in addition to the unsaturated fatty acids having two or more double bonds. As the unsaturated fatty acids having one double bond, unsaturated fatty acids having from 16 to 24 carbon atoms, such as oleic acid and palmitoleic acid, can be mentioned.

The oil or fat (A1) in the pet food according to the present invention further contains triacylglycerol, and may also contain some monoacylglycerol, free fatty acids and the like. They include those contained in the above-mentioned natural oils or fats, and also, those contained in produced diacylglycerol-containing oils or fats, and oils or fats contained in mixed plant materials and animal materials. Especially from the standpoints of the readiness of occurrence of an unpleasant smell from the oil or fat and taste acceptability, the content of free fatty acids in the oil or fat may be preferably 20% or lower, more preferably 15% or lower, still more preferably 10% or lower, even more preferably 5% or lower, still even more preferably 2% or lower.

The content of the oil or fat as the ingredient (A1) in the pet foodmaybepreferablyfrom3 to 50%, more preferably from 5 to 45%, still more preferably from 5 to 40%, even more preferably from 8 to 35%, still even more preferably from 10 to 30% from the standpoints of anti-obesity effect and the removal of an unpleasant smell from the pet food.

The pet food according to the present invention may preferably contain a natural antioxidant or its derivative as an ingredient (D). As the ingredient (D), ascorbic acid (vitamin C), ascorbyl palmitate or ascorbyl stearate as a derivative thereof, or a mixture thereof; an organic acid such as citric acid; a carotenoid such as β-carotene, lycopene, lutein or astaxanthin; a tocopherol such as α-tocopherol, β-tocopherol, γ-tocopherol or δ-tocopherol; a herb extract such as a rosemary extract, turmeric extract or sage extract; a polyphenol such as catechin, saponin, flavonoid or anthocyanine; or the like can be mentioned. One or more antioxidants selected from the above-exemplified antioxidants can be used. The antioxidant or its derivative (D) may be preferably 0.01% or more, more preferably from 0.01 to 1%, still more preferably from 0.02 to 0.5% based on the ingredient (A1) from the standpoints of oxidation stability and anti-obesity effect.

The pet food according to the present invention may contain minerals as the ingredient (E). Concerning the contents of iron ions and copper ions in the pet food, it is preferred to satisfy the following equation (1):

$$[Cu\ (mg/kg)] + [Fe\ (mg/kg)]/10 \leq 80\ (1)$$

When the equation (1) is not satisfied, the mineral ingredients act as catalysts so that the oxidation of unsaturated fatty acids is promoted to reduce the storage stability of the pet food. The range of [Cu (mg/kg)] + [Fe (mg/kg)]/10 may be more preferably 70 and smaller, still more preferably from 10 to 60 from the standpoints of nutritional balance and storage stability. The lower limits of the respective minerals may be preferably 80 mg/kg for iron ions and 7.3 mg/kg for copper ions from the standpoint of nutrition, while their upper limits may be preferably 727 mg/kg for iron ions and 72 mg/kg for copper ions from the standpoint of oxidation stability.

As minerals other than copper and iron, the pet food according to the present invent ion may also contain manganese, cobalt, calcium, phosphorus, sodium, potassium and the like. These minerals can be mixed, for example, as copper sulfate, iron sulfate, manganese oxide, cobalt carbonate, calcium carbonate, calcium phosphate, sodium chloride, potassium chloride and the like.

Other carbohydrate sources usable in the pet food according to the present invention include monosaccharides, oligosaccharides other than malto-oligosaccharides, polysaccharides, dietary fibers, starches and the like. The term "dietary fibers" mean materials nondigestible by digestive enzymes of animals, and include water-insoluble dietary fibers and water-soluble dietary fibers. Specific examples of the former include beat fibers, pea fibers, chicory root, alfalfa meal, wheat bran and so on, which contain cellulose, hemicellulose and the like. Specific examples of the latter include indigestible oligosaccharides such as galacto-oligosaccharide, fructo-oligosaccharide, soybean oligosaccharide, xylo-oligosaccharide, lactosucrose, raffinose, lactulose, palatinose oligosaccharide, nigero-bligosaccharide and gentio-oligosacharide; polydextroses; indigestible dextrins; guar gum enzymolyzates; psyllium seed coat; glucomannan; agar; water-soluble soybean polysaccharides; water-soluble corn fiber; inulin; carboxymethylcellulose; alginic acid; and the like. Among these, beat pulp is preferred for its inclusion of both water-insoluble dietary fibers and water-soluble dietary fibers. As the starches, wheat starch, rice starch, potato starch, ocarina starch, tapioca starch and like can be mentioned in addition to those described above. The carbohydrate may be included as a cereal, and as the cereal, wheat, rye, milo, rice, barnyard grass, millet, amaranthus, quinua or the like can be mentioned. The carbohydrate may be contained in an amount of preferably from 10 to 70%, more preferably from 20 to 60%, still more preferably from 30 to 50% in the pet food from the standpoints of economy, anti-obesity effect, ingestion capacity and the conditions of feces.

Preferably, the pet food according to the present invention may further contain (F) an animal or plant protein from the standpoint of anti-obesity effect, ingestion capacity and nutritional balance. An animal protein is preferred from the standpoint of ingestion capacity. As the animal protein, an animal meat protein is preferred from the standpoints of anti-obesity and ingestion capacity although a milk protein such as casein can also be mentioned. As such animal meat proteins, livestock meat and animal meat such as beef, pork, lamb, rabbit and kangaroo, and their byproducts and processed products; poultry meat such as chicken, turkey and quail, and their by products and processed products; fish meal such as fish and whitefish, and their byproducts and processed products; renderings of the above-describedmaterials, suchasmeatmeal, meatbonemeal, chicken meal and fish meal; and the like can be mentioned. Among these, chicken and fish are preferred from the standpoint of anti-obesity. When plural meat proteins are used in combination, chicken and/or fish may be included in an amount of preferably from 30 to 100%, more preferably from 50 to 100% in the meat.

As plant proteins, soybean protein, wheat protein, wheat gluten, corn gluten and the like are preferred.

The animal or plant protein maybe containedpreferably in an amount of preferably from 5 to 70%, more preferably from 10 to 60%, still more preferably from 15 to 40% in terms of loss in weight on drying in the pet food according to the present invention.

The pet food according to the present invention may further contain a plant sterol. The plant sterol may be contained in an amount of preferably 0.1% or more, more preferably 0.5% or more in the pet food from the standpoint of cholesterol-lowering effect. The upper limit of the content of the plant sterol may be up to 30%. Examples of the plant sterol include free sterols such as $\alpha$-sitosterol, $\beta$-sitosterol, stigmasterol, campesterol, $\alpha$-sitostanol, $\beta$-sitostanol, stigmastanol, campestanol and cycloartenol; and their esters such as their fatty acid esters, ferulate esters and cinnamate esters.

In the pet food according to the present invention, one or more of bran, chaffs, vegetables, vitamins, minerals and the like can be mixed further. As the bran, rice bran, wheat bran and the like can be mentioned, and as the chaffs, soybean chaff and the like can be mentioned. As the vegetables, vegetable extracts and the like can be mentioned. As the vitamins, A, B1, B2, D, E, niacin, pantothenic acid, carotene and the like can be mentioned. They may each be contained preferably in an amount of from 0.05 to 10%. In addition, one or more of gelling agents, shape retainers, pH adjusters, seasonings, preservatives, supplements and the like, which are commonly used in pet foods, may also be contained. It is preferred, for the inhibition of oxidation of the oil or fat, to perform the production while replacing air in a vessel with an inert gas such as nitrogen or deaerating the vessel, because such replacement or deaeration is effective especially in a heating step. The pet food according to the present invention may be in any one of forms such as the dry type, wet type, semi-moist type, jerky type, biscuit type, gum type, granule form, powder form and soup form.

Owing to the inclusion of the oil or fat containing 20% or more of diacylglycerol and the above-described carbohydrate source such as modified starch, the pet food according to the present invention is effective for the prevention or suppression of a weight gain even when fed at ordinary dietary level to pets. Further, it can prevent or suppress visceral fat accumulation, and hence, can exhibit effectiveness for the prevention of hyperlipemia, heat diseases such as heart failure, thrombotic disease, hypertension and the like, all of which would otherwise be caused by obesity. It also has an effect to inhibit postprandial hyperglycemia, that is, a sudden postprandial rise in blood sugar level and also an effect to suppress a rise in blood sugar level at normal time, and therefore, it can exhibit effectiveness for the prevention of diabetes and various complications caused by diabetes, for example, cataract, periodontal disease, diabetic nephropathy, retinopathy, and nervous disorders. It also has an effect to reduce unpleasant smell derived from an animal protein, especially meat.

For the features described above, the ingestion of the pet food according to the present invention is effective for the prevention or suppression of the obesity of pets and is also effective for the suppression of the weight gain of pets. Containers or packages of the pet food according to the present invention can, therefore, be labeled "EFFECTIVE FOR THE PREVENTION OFOBESITY IN PETS", "EFFECTIVE FOR THE CONTROL OF OBESITY IN PETS", "EFFECTIVE FOR THE SUPRESSION OF WEIGHT GAIN IN PETS", "SUITED FOR PETS WITH WORRISOME OBESITY" and/or the like.

## Examples

Test examples 9 and 11 represent embodiments of the invention. The remaining test examples are for reference purposes only.

Test Examples 1-4

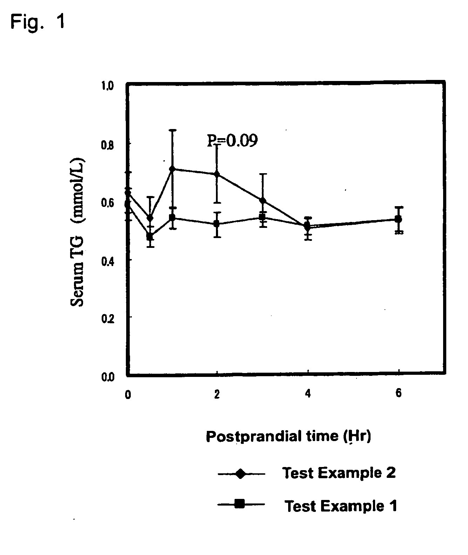

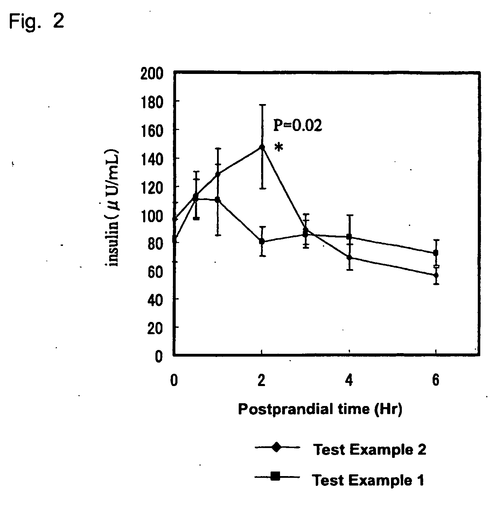

After each test diet of the corresponding composition shown in Table 1 was fed to the ten (10) obese beagles shown in Table 2 (2 to 4 years old, male, BCS (body condition score) ≥ 4) as much as 200 g per dog, postprandial variations in blood neutral fat level and postprandial variations in blood insulin level were measured (Test 1 and Test 2). The results are shown in FIGS. 1 and 2. With respect to all of Test Examples 1-4, the conditions of feces of the pets and their preference to the diets were evaluated, and the results are shown in Table 1. It is to be noted that based on an organoleptic evaluation by vision or touch, each BCS was determined in accordance with the below-described standards.

[BCS Evaluation Standards]

1 (Thin) : No fat covering. Visible skeletal structure such as ribs, and bony prominence at tail base. Obvious abdominal tuck (tuck around the bases of hind legs). Obvious waist.

2 (Underweight): Thin fat covering. Discernable and easily palpable skeletal structure such as ribs, and bony prominence at tail base. Evident abdominal tuck. Easily noticeable waist.

3 (Ideal) : Adequate fat covering. No discernable and hardly palpable skeletal structure such as ribs, and gentle bony prominence at tail base. No substantial abdominal tuck. Practically no waist.

4 (Overweight): Thick fat covering. No discernable and hardly palpable skeletal structure such as ribs, and barely palpable bony prominence at tail base. Fat deposits at abdominal area, and no noticeable abdominal tuck. Waist absent.

5 (Obese) : Wrapped with thick fat covering. Neither discernable nor palpable skeletal structure such as ribs, and no palpable bony prominence at tail base. Massive fat deposits at abdominal area, distending and sagging, and no noticeable abdominal tuck. Waist absent.

[Measuring method of blood neutral fat level]

For each blood neutral fat level, "TRIGLYCERIDEG-TEST WAKO" (product of Wako Pure Chemical Industries, Ltd.), a commercial measuring kit, was used. The color developer (36 U/mL lipoprotein lipase, 1.8 mM ATP, 2.2 U/mL glycerol kinase, 4.4 U/mL glycerol-3-phosphate oxidase, 2.1 U/mL peroxidase, 0.69 mM 4-aminoantipyrin) of the kit was dissolved with a buffer (50 mM Tris buffer, pH 7.5, 5.4 mM p-chlorophenol) to prepare a coloring test solution. After the coloring test solution (700 μL) was added to serum (10 μL) and the resultant mixture was mixed, incubation was conducted at 37°C for 10 minutes. The absorbance at 505 nm was measured using "UV-VISIBLE SPECTROPHOTOMETER UV-2200A" (Shimadzu Corporation).

[Measuring method of blood insulin level]

Using "INSULIN RIA-BEAD II KIT" (Dinabbot Co., Ltd.), each blood insulin level was measured by the IRMA method in the procedure to be described next. A standard sample for the preparation of a calibration curve and a sample were measured as much as 50 μL in test tubes, respectively. In each of the test tubes, an anti-insulin antibody labeled with I-125 (200 μL) was added, followed by thorough mixing. Beads coated with another antibody were then placed in the test tube, followed by shaking for 2.5 hours on a shaker. Subsequently, the beads were taken out of the test tube and were thoroughly washed with distilled water (1 mL). The insulin adsorbed on the beads was thereafter measured by a scintillation counter.

[Evaluation method for the conditions of feces]

For the evaluation of the conditions of feces, changes in "hardness", "smell" and "overall evaluation" shortly after defecation compared with feces before feeding the test diets were evaluated in accordance with the below-described ranking standards, and average scores of each dog were determined.

- Hardness of feces

5: Became harder.
4: Became a little harder.
3: Not changed.
2: Became a little softer

1: Became softer.

- Smell of feces

5: Smelled weaker.
4: Smelled a little weaker.
3: Not changed.
2: Smelled a little stronger.
1: Smelled stronger.

- Overall evaluation

5: Improved.
4: Improved a little.
3: Not changed.
2: Deteriorated a little.
1: Deteriorated.

[Evaluation method of dog's preference]

The four test diets (50 g each) of Test Examples 1 to 4 were placed on bowls of the same shape, respectively, and the bowls were then arranged in an array at a position 3 mapart from the dog. The dogs shown in Table 2 were allowed, one after another, to eat the test diets, twice per dog. The test was conducted by changing the order of the arrangement of the plates from dog to dog. Score 1 was given to the feed eaten up firstly, and each feed was evaluated based on its total score (maximum score: 20).

[Table 1]

| | | | | | | | | | (wt%) |
|---|---|---|---|---|---|---|---|---|---|
| Pet food materials | Carbo hydrate | Lipids | Protein | others | Test Ex. 1 | Test Ex. 2 | Test Ex. 3 | Test Ex. 4 | |
| Barley | 73 | 2.2 | 10 | 14.8 | 38 | 42 | 38 | 42 | |
| Chicken meal | 1 | 15 | 65 | 19 | 18 | 18 | 18 | 18 | |
| Corn gluten meal | 23 | 4 | 60 | 13 | 14 | 14 | 14 | 14 | |
| Sorghum (red milo) | 70 | 3.2 | 12.4 | 14.4 | 10 | 10 | 10 | 10 | |
| 85 wt% diacylglycerol-containing oil[1] | - | 100 | - | - | 5 | 5 | - | - | |
| Triacylglycerol (rapeseed-soybean mixed oil)[2] | - | 100 | - | - | - | - | 5 | 5 | |
| Beat pulp | 52.7 | 0.5 | 8 | 33.8 | 5 | 5 | 5 | 5 | |
| Modified starch[3] | 90 | - | - | 10 | 4 | - | 4 | - | |
| Mineral mix | - | - | - | - | 3 | 3 | 3 | 3 | |
| Vitamin mix | - | - | - | - | 2 | 2 | 2 | 2 | |
| Chicken oil | - | 99 | - | 1 | 1 | 1 | 1 | 1 | |

(continued)

| Pet food materials | | Carbo hydrate | Lipids | Protein | others | Test Ex. 1 | Test Ex. 2 | Test Ex. 3 | Test Ex. 4 |
|---|---|---|---|---|---|---|---|---|---|
| | | | | | | | | | (wt%) |
| Evaluation | Conditions of feces | Hardness | | | | 5 | 2 | 3 | 1 |
| | | Smell | | | | 3 | 3 | 3 | 2 |
| | | Overall | | | | 5 | 3 | 3 | 1 |
| | Dog's preference | | | | | 8 | 4 | 5 | 3 |

1) Fatty acid composition in glyceride (wt%)
C16 3.1%, C18 1.2%, C18:1 40.5%, C18:2 46.0%, C18:3 8.7%, Others 0.5% Glyceride composition (wt%)
Free fatty acids 1.4%, monoacylglycerol 2.1%, diacylglycerol 85.0%, triacylglycerol 11.5%
2) Fatty acid composition in glyceride (wt%)
C16 5.3%, C18 2.3%, C18:1 37.7%, C18:2 46.5%, C18:3 7.8%, Others 0.4% Glyceride composition (wt%)
Free fatty acids 3.1%, monoacylglycerol 1.9%, diacylglycerol 4.6%, triacylglycerol 90.4%
3) "NATIONAL FRIGEX" (derived from tapioca, National Starch and Chemical Company)

[Table 2]

| Dog Nos. | Weight (kg) | BCS |
|---|---|---|
| 1 | 18.3 | 4.5 |
| 2 | 17.8 | 4.5 |
| 3 | 19.4 | 5 |
| 4 | 17.0 | 4 |
| 5 | 19.1 | 5 |
| 6 | 18.4 | 4.5 |
| 7 | 12.8 | 4 |
| 8 | 13.0 | 4 |
| 9 | 13.4 | 4.5 |
| 10 | 12.7 | 5 |

As shown in FIGS. 1 and 2, the pet food, in which the oil or fat containing more than 20% of diacylglycerol and the modified starch were mixed, suppressed the postprandial blood neutral fat level (FIG. 1) and the postprandial blood insulin level (FIG. 2) in comparison with the pet food in which no modified starch was mixed.

Further, the ingestion capacity of (preference to) the pet food of Test Example 1 was better compared that of the pet foods of Test Examples 2 to 4. Furthermore, after the ingestion of the pet food of Test Example 1, the conditions of feces were good, and the smell was not changed compared with that of feces when usual diet was fed.

Test Examples 5-8

Twelve general monitor dogs shown in Table 3 (2 to 6 years old, BCS (body conditioning score) : ≥4) were allowed to eat the control diet (Test Example 6), which is shown in Table 4, for 2 months to determine the weight maintenance calorie. Subsequently, grouping was conducted, and to the respective groups, the test diets shown in Table 4 were fed as much as the weight maintenance calorie. Postprandial weight changes at the time of the feeding were measured. The results are shown in Table 5. Further, the conditions of feces of the pets and their preference to the diets were evaluated as in Test Example 1. The results are shown in Tables 6 and 7. It is to be noted that BCS was organoleptically determined by vision and touch in accordance with the same standards as in Test Example 1.
[Table 3]

| Dog Nos. | Dog breeds | Sex | Age (years old) |
|---|---|---|---|
| 1 | Pug | ⚲ | 2.0 |
| 2 | Chihuahua | ♂ | 4.7 |
| 3 | Jack Russell terrier | ⚲ | 2.1 |
| 4 | Chihuahua | ♀ | 2.8 |
| 5 | Chihuahua | ⚲ | 4.2 |
| 6 | Miniature dachshund | ⚲ | 5.3 |
| 7 | Mix | ⚲ | 5.1 |
| 8 | Yorkshire terrier | ♂ | 2.1 |
| 9 | Labrador retriever | ♂ | 5.2 |
| 10 | Welsh Corgi Cardigan | ♂ | 5.4 |
| 11 | Welsh Corgi Pembroke | ⚲ | 6.3 |
| 12 | Miniature dachshund | ♀ | 6.0 |
| ♂ : male, ⚲ : neutered male, ♀ : female, ⚲ : fixed female | | | |

[Table 4]

| Materials (wt%) | Test Ex. 5 | Test Ex. 6 (control diet) | Test Ex. 7 | Test Ex. 8 |
|---|---|---|---|---|
| Barley | 36 | 10 | 15 | 10 |
| Unpolished brown rice | - | 30 | - | 30 |
| Sorghum | 7 | 10 | 13 | 10 |
| High-amylose corn | 6 | - | 20 | - |
| Chicken meal | 25 | 25 | 25 | 25 |
| Corn gluten | 20 | 20 | 20 | 20 |
| Diacylglycerol-rich oil[1] | 5 | 5 | 5 | - |
| Triacylglycerol (rapeseed-soybean mixed oil)[2] | - | - | - | 5 |
| Chicken oil | 1 | 1 | 1 | 1 |

(continued)

| Materials (wt%) | Test Ex. 5 | Test Ex. 6 (control diet) | Test Ex. 7 | Test Ex. 8 |
|---|---|---|---|---|
| Vitamins/minerals | 1 | 1 | 1 | 1 |

1) Diacylglycerol-rich oil
Fatty acid composition in glyceride (wt%)
C16 3.1%, C18 1.2%, C18:1 40.5%, C18:2 46.0%, C18:3 8.7%, Others 0.5% Glyceride composition (wt%)
Free fatty acids 1.4%, monoacylglycerol 2.1%, diacylglycerol 85.0%, triacylglycerol 11.5%
2) Triacylglycerol
Fatty acid composition in glyceride (wt%)
C16 5.3%, C18 2.3%, C18:1 37.7%, C18:2 46.5%, C18:3 7.8%, Others 0.4% Glyceride composition (wt%)
Free fatty acids 3.1%, monoacylglycerol 1.9%, diacylglycerol 4.6%, triacylglycerol 90.4%

[Table 5]

| Tests | Dog Nos. | 0 week | | 8 weeks | | Anti-obesity effect (average weight loss rate) |
|---|---|---|---|---|---|---|
| | | Weight (kg) | BCS | Weight (kg) | BCS | |
| Test Ex. 5 | 1 | 9.8 | 4.5 | 9.1 | 3.5 | 10.2% loss Very effective |
| | 2 | 4.55 | 4.5 | 3.80 | 3.5 | |
| | 3 | 8.65 | 4.0 | 8.05 | 3.5 | |
| | 4 | 4.75 | 4.5 | 4.25 | 4.0 | |
| Test Ex. 6 | 5 | 3.4 | 4.0 | 3.3 | 4.0 | 0.4% loss Not effective |
| | 6 | 7.25 | 4.0 | 7.25 | 4.0 | |
| | 7 | 12.3 | 4.0 | 12.5 | 4.0 | |
| Test. Ex. 7 | 8 | 3.65 | 4.0 | Stopped due to low taste acceptability | | Unable to evaluate |
| | 9 | 38.9 | 4.0 | Stopped due to deterioration in the conditions of feces | | |
| Test Ex. 8 | 10 | 20.6 | 5.0 | 21.5 | 5.0 | 7.09% gain Adversely effective |
| | 11 | 12.4 | 4.0 | 13.2 | 4.0 | |
| | 12 | 6.1 | 4.0 | 6.9 | 4.5 | |

[Table 6]

| Tests | Dog Nos. | Feces conditions (hardness) | Feces conditions (smell) | Overall evaluation of feces conditions | Averaged overall of evaluation of feces |
|---|---|---|---|---|---|
| Test Ex. 5 | 1 | 1 | 4 | 3 | 3.75 Good |
| | 2 | 4 | 4 | 4 | |
| | 3 | 4 | 3 | 4 | |
| | 4 | 3 | 4 | 4 | |
| Test Ex. 6 | 5 | 3 | 3 | 3 | 3 Normal |
| | 6 | 3 | 3 | 3 | |
| | 7 | 3 | 3 | 3 | |

(continued)

| Tests | Dog Nos. | Feces conditions (hardness) | Feces conditions (smell) | Overall evaluation of feces conditions | Averaged overall of evaluation of feces |
|---|---|---|---|---|---|
| Test. Ex. 7 | 8 | 1 | 2 | 1 | 1 Poor |
| | 9 | 1 | 3 | 1 | |
| Test Ex. 8 | 10 | 2 | 3 | 2 | 1.75 Poor |
| | 11 | 1 | 2 | 1 | |
| | 12 | 2 | 2 | 2 | |

[Table 7]

| Tests | Score on preference | Evaluation |
|---|---|---|
| Test Example 5 | 12 | Good |
| Test Example 6 | 4 | Normal |
| Test Example 7 | 1 | Poor |
| Test Example 8 | 3 | Poor |

As shown in Table 5, a weight loss was observed with the pet food containing barley and sorghum and/or high-amylose starch in amounts to satisfy (burley/sorghum)>5 and/or (barley/high-amylose starch) >5 in terms of weight ratio in comparison with the pet foods which did not satisfy these ranges.

Further, as shown in Table 6, after the ingestion of the pet food of Test Example 5, the conditions of feces were good and the smell did not change compared with that given off from feces after the usual diet was fed. Moreover, as shown in Table 7, the ingestion capacity for (preference to) the pet food of Test Example 5 was better compared with those of the pet foods of Test Examples 6 to 8. However, the ingestion capacity and feces conditions of the pet foods of Test Examples 6 and 7 were better compared with those of the pet food in which the diacylglycerol was not mixed as much as 20% or more.

Test Examples 9-12

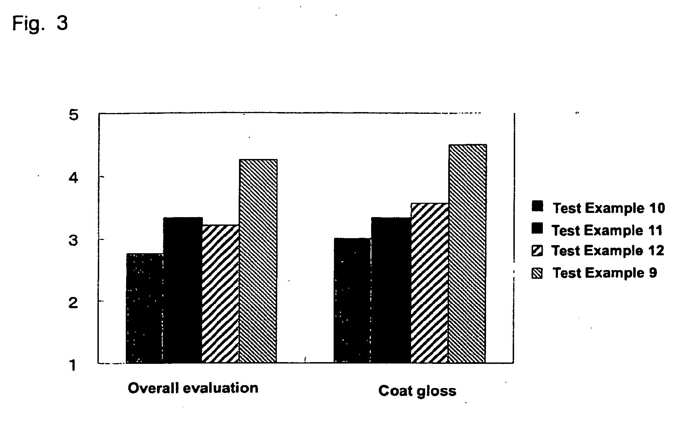

Test diets of the compositions shown in Table 8 were fed ab libitum for 28 days to the 16 household dogs shown in Table 9 (divided into 4 groups to feed each test diet to 4 dogs). As the lactic acid bacteria, Enterococcus feacalis (Combi Corporation) was used, and as the malto-oligosaccharide, "FUJI OLIGO 450P" (Nihon Shokuhin Kako Co., Ltd. ; 70% malto-oligosaccharides of 4 to 7 glucose polymerization degrees) was employed. Twenty-eight (28) days later, the "coat gloss" and "overall evaluation" of each pet were evaluated in accordance with the below-described standards, and the average score was determined for each group. The results are shown in Table 8 and FIG. 3.

[Evaluation standards for coat gloss]

To a question (questionnaire: "How has his/her 'coat gloss' changed compared with before the change to this test diet?"), the dog owner was requested to choose one of the following options:

5: Improved
4: Improved a little
3: Not changed
2: Deteriorated a little 1: Deteriorated

[Evaluations standards for overall evaluation]

To a question (questionnaire: "Does he/she look healthier compared with before the change to this test diet?"), the dog owner was requested to choose one of the following options:

5: Looks healthier
4: Looks a little healthier
3: Not changed
2: Looks a little unhealthier
1: Looks unhealthier

[Table 8]

| | Test Ex. 9 | Test Ex. 10 | Test Ex. 11 | Test Ex. 12 |
|---|---|---|---|---|
| | | | | (wt%) |
| Pet food materials | Test Ex. 9 | Test Ex. 10 | Test Ex. 11 | Test Ex. 12 |
| Barley | 25 | 25 | 25 | 25 |
| Chicken meal | 25 | 25 | 25 | 25 |
| Corn gluten | 23 | 23 | 23 | 23 |
| Sorghum | 15 | 15 | 15 | 15 |
| oil or fat(85% diacylglycerol) | 5 | 5 | 5 | 5 |
| Chicken oil | 2 | 2 | 2 | 2 |
| Corn starch | 3 | 5 | 5 | 3 |
| Lactic acid bacteria (cells/100 g) | $10^{11}$ | - | $10^{11}$ | - |
| Malto-oligosaccharide | 2 | - | - | 2 |
| Evaluation of coat gloss | 4.5 | 3.0 | 3.3 | 3.6 |
| Overall evaluation | 4.3 | 2.8 | 3.3 | 3.2 |

[Table 9]

| Test Examples | Breeds | Age | Weight (kg) |
|---|---|---|---|
| Test Ex. 10 | Papillon | 4 years and 1 month | 2.5 |
| | Chihuahua | 2 years and 10 months | 2.4 |
| | Japanese *shiba* | 5 years and 3 months | 7 |
| | Miniature dachshund | 1 year and 2 months | 5 |
| Test Ex. 11 | Japanese *shiba* | 2 years | 3 |
| | Bichon Frise | 3 years | 7 |
| | Miniature dachshund | Not known | 6 |
| | Papillon | 2 years and 5 months | 3 |
| Test Ex. 12 | American Cocker spaniel | 2 years and 8 months | 10.5 |
| | Bernese mountain dog | 3 years and 7 months | 35 |
| | Miniature dachshund | 4 years and 1 month | 5.6 |
| | Papillon | 2 years and 5 months | 2.5 |
| Test Ex. 9 | Welsh Corgi Pembroke | 3 years | 10.3 |
| | Toy poodle | 2 years and 6 months | 3 |
| | Long coat Chihuahua | 1 year and 7 months | 1.5 |
| | Cavalier king charles spaniel | 3 years and 2 months | 3.5 |

As shown in Table 8 and FIG. 3, compared with the test diet containing neither lactic acid bacteria nor malto-oligosaccharide (Test Example 10), the pets fed with the test diet containing lactic acid bacteria alone (Test Example 11) and the test diet containing malto-oligosaccharide alone (Test Example 12) showed a little better results in both "coat weight" and "overall evaluation", but the pets fed with the test containing both of lactic acid bacteria and malto-oligosaccharide (Test Example 9) were found to be significantly improved in both "coat weight" and "overall evaluation". However, the pet foods of Test Examples 10 to 12 were good in ingestion capacity and feces conditions.

Examples 13-18

Using a diacylglycerol-rich oil or fat of the composition shown in Table 10, pet foods were produced by an extruder in accordance with the formulas shown in Table 11. After each pet food was stored for 12 weeks under an environment controlled at 40°C and 75% R.H., oil and fat were extracted and their peroxide value (POV) was measured. The results are shown in Table 12. It is to be noted that the POV shortly after the production of each pet food was 3 meq/kg.

[Table 10]

| Fatty acid composition (wt%) | |
|---|---|
| C16:0 | 3.1 |
| C18:0 | 1.2 |
| C18:1 | 40.5 |
| C18:2 | 46.0 |
| Others | 0.5 |
| Glyceride composition (wt%) | |
| Free fatty acids | 1.4 |
| Monoacyl glycerol | 2.1 |
| Diacyl glycerol | 85.0 |
| Triacyl glycerol | 11.5 |

[Table 11]

| Pet food materials | Examples | | | | | |
|---|---|---|---|---|---|---|
| | 13 | 14 | 15 | 16 | 17 | 18 |
| Wheat (fat: 2.2%) | 25 | 25 | 25 | 25 | 25 | 25 |
| Chicken meal (fat: 15%) | 25 | 25 | 25 | 25 | 25 | 25 |
| Corn gluten meal (fat: 4%) | 20 | 20 | 20 | 20 | 20 | 20 |
| Sorghum (red milo) (fat: 3.2%) | 12 | 12 | 12 | 12 | 12 | 12 |
| Diacylglycerol-rich oil (Table 10) (oil: 100%) | 5 | 5 | 5 | 5 | 5 | 5 |
| Beat pulp (fat: 0.5%) | 5 | 5 | 5 | 5 | 5 | 5 |
| Modified starch (oil: 0%) | 4.5 | 4.5 | 4.5 | 4.5 | 4.5 | 4.5 |
| Chicken oil (oil: 99%) | 1 | 1 | 1 | 1 | 1 | 1 |

(continued)

| Pet food materials | | Examples | | | | | |
|---|---|---|---|---|---|---|---|
| | | 13 | 14 | 15 | 16 | 17 | 18 |
| Vitamin mix | Copper (mg/kg) | 14 | 17 | 18 | 21 | 35 | 54 |
| | Iron (mg/kg) | 434 | 330 | 263 | 301 | 673 | 280 |
| | Manganese (mg/kg) | 30 | 34 | 23 | 38 | 35 | 25 |
| | Zinc (mg/kg) | 330 | 456 | 207 | 208 | 313 | 205 |
| | Cobalt (mg/kg) | 7 | 10 | 4 | 6 | 9 | 7 |
| | Calcium (%) | 1.28 | 1.39 | 1.15 | 1.25 | 1.10 | 1.20 |
| | Phosphorus (%) | 1.12 | 1.00 | 0.98 | 1.01 | 0.99 | 1.00 |
| | Others (%) | 0.03 | 0.03 | 0.32 | 0.19 | 0.31 | 0.25 |
| Value of the left side in the equation (1) | | 57 | 50 | 44 | 51 | 102 | 82 |
| POV after 12 weeks (meq/kg) | | 19 | 18 | 9 | 11 | 88 | 50 |

[Extraction method of oil or fat]

The extraction of oil or fat from each pet food was conducted following the procedure to be described next. The pet food (50 g) was ground and shifted through a sieve of 1 mm opening size. A sample of the ground pet food was filled in a cylindrical filter paper, and the cylindrical filter paper was set on a cocked open column. With the cock maintained closed, diethyl ether (150 mL) was added dropwise from a dropping funnel. Subsequent to the completion of the dropwise addition, the cock of the column was opened to recover the diethyl ether. Subsequently, a similar operation was conducted with diethyl ether (50 mL). The recovered diethyl ether was removed by topping to obtain the oil or fat which had been extracted from the pet food.

[POV measuring method]

The POV of the oil or fat extracted from each pet food was determined in accordance with the procedure to be described next. The extracted oil or fat (5 g) was weighed in a 250-mL Erlenmeyer flask, and was dissolved in a 3:1 (volume ratio) solution (30 mL) of acetic acid and chloroform. A saturated solution of potassium iodide (0.5 mL) was added to the flask, followed by thorough shaking for 1 minute. Subsequently, distilled water (30 mL) was added, and a 1% starch solution (0.5 mL) was further added to provide a titration sample for titration. The titration sample was titrated with 0.01 N sodium thiophosphate. Disappearance of a purple color was taken as an end point, at which the titer was substituted into the below-described equation to obtain a POV value.

$$\text{POV (meq/kg)} = A \times F/S \times 10$$

A: Amount of 0.01 N sodium thiophosphate (mL)
F: Factor of 0.01 N sodium thiophosphate
S: Amount of sample (g)
The fatty acid composition and glyceride composition of the oil or fat extracted from each pet food are shown in Table 12.
[Table 12]

| Fatty acid composition (wt%) | |
|---|---|
| C16:0 | 11.7 |
| C16:1 | 2.3 |
| C18:0 | 3.2 |
| C18:1 | 38.2 |

(continued)

| Fatty acid composition (wt%) | |
|---|---|
| C18:2 | 37.3 |
| C18:3 | 3.5 |
| Others | 3.8 |
| Glyceride composition (wt%) | |
| Free fatty acids | 18.7 |
| Monoacyl glycerol | 0.6 |
| Diacyl glycerol | 31.1 |
| Triacyl glycerol | 49.6 |

As shown in Table 11, it has been found that, even when an antioxidant is incorporated in a pet food containing a diacylglycerol-rich oil or fat the constituent fatty acids of which include 20% or more of unsaturated fatty acids containing two or more double bonds, storage stability is low even at low contents of mineral ingredients (Test Example 18) when the contents of copper ions and iron ions do not satisfy the above-described equation (1) (Test Examples 17 and 18). With respect to the invention product satisfying the above-described formula (1), on the other hand, it has been found that its storage stability is excellent even when mineral ingredients are contained abundantly.
It is to be noted that the pet foods of Test Examples 17 and 18 were good in ingestion capacity and feces conditions.

## Claims

1. A pet food comprising (A) an oil or fat and (B) one or more of carbohydrate sources selected from the group consisting of modified starch, barley, sorghum, corn and high-amylose starch; and (C a malto-oligosaccharide and lactic acid bacteria, wherein a content of diacylglycerol in a whole oil or fat is 20 wt% or higher.

2. The pet food according to claim 1, wherein the malto-oligosaccharide is one having a glucose polymerization degree of from 4 to 7.

3. The pet food according to claim 1 or 2, wherein a content of the malto-oligosaccharide having a glucose polymerization degree of from 4 to 7 in whole saccharide is 20 wt% or higher.

4. The pet food according to any one of claims 1-3, wherein the lactic acid bacteria is Enterococcus bacteria.

5. The pet food according to any one of claims 1-4, wherein the pet food comprises 8 wt% or more of an oil or fat containing 2.5 wt% or more of w-3 unsaturated fatty acids in constituent fatty acids thereof.

6. The pet food according to claim 1, wherein the pet food comprises modified starch as the carbohydrate source, and a content of the modified starch in the pet food is 3 wt% or higher.

7. The pet food according to any one of claims 1-6, further comprising (F) an animal or plant protein.

8. The pet food according to claim 7, wherein the animal protein is an animal meat protein.

## Patentansprüche

1. Tierfutter, umfassend (A) ein Öl oder Fett, (B) eine oder mehrere Kohlenhydratquellen, ausgewählt aus der Gruppe bestehend aus modifizierter Stärke, Gerste, Hirse, Mais und amylosereicher Stärke, und (C) ein Malto-oligosaccharid und Milchsäurebakterien; wobei der Gehalt an Diacylglycerin in dem gesamten Öl oder Fett 20 Gew.% oder höher ist.

2. Tierfutter gemäss Anspruch 1, wobei das Malto-oligosaccharid einen Glucose-Polymerisationsgrad von 4 bis 7 hat.

**3.** Tierfutter gemäss Anspruch 1 oder 2, wobei der Gehalt an Malto-oligosaccharid mit einem Glucose-Polymerisationsgrad von 4 bis 7 im gesamten Saccharid 20 Gew.% oder höher ist.

**4.** Tierfutter gemäss einem der Ansprüche 1 bis 3, wobei die Milchsäurebakterien Enterococcus-Bakterien sind.

**5.** Tierfutter gemäss einem der Ansprüche 1 bis 4, wobei das Tierfutter 8 Gew.% oder mehr eines Öls oder Fettes, das 2,5 Gew.% oder mehr an $\omega$-3-ungesättigten Fettsäuren in den einzelnen Fettsäuren davon enthält, umfasst.

**6.** Tierfutter gemäss Anspruch 1, wobei das Tierfutter modifizierte Stärke als Kohlenhydratquelle umfasst und der Gehalt an modifizierter Stärke in dem Tierfutter 3 Gew.% oder höher ist.

**7.** Tierfutter gemäss einem der Ansprüche 1 bis 6, das weiterhin (F) ein tierisches oder pflanzliches Protein umfasst.

**8.** Tierfutter gemäss Anspruch 7, wobei das tierische Protein ein tierisches Fleischprotein ist.

**Revendications**

**1.** Aliment pour animaux domestiques comprenant (A) une huile ou une graisse et (B) une ou plusieurs de sources d'hydrates de carbone choisie(s) parmi le groupe consistant en un amidon modifié, l'orge, le sorgho, le maïs et un amidon à forte teneur en amylose ; et (C) un malto-oligosaccharide et une bactérie lactique, dans lequel une teneur de diacylglycérol dans une huile ou une graisse complète est 20% en poids ou plus.

**2.** Aliment pour animaux domestiques selon la revendication 1, dans lequel le malto-oligosaccharide en est un ayant un degré de polymérisation du glucose de 4 à 7.

**3.** Aliment pour animaux domestiques selon la revendication 1 ou 2, dans lequel une teneur du malto-oligosaccharide ayant un degré de polymérisation du glucose de 4 à 7 dans le saccharide complet est 20% en poids ou plus.

**4.** Aliment pour animaux domestiques selon l'une quelconque des revendications 1 à 3, dans lequel la bactérie lactique est la bactérie *Enterococcus.*

**5.** Aliment pour animaux domestiques selon l'une quelconque des revendications 1 à 4, dans lequel l'aliment pour animaux domestiques comprend 8% en poids ou plus d'une huile ou d'une graisse contenant 2,5% en poids ou plus d'acides gras insaturés $\omega$-3 dans les acides gras constituants de celle-ci.

**6.** Aliment pour animaux domestiques selon la revendication 1, dans lequel l'aliment pour animaux domestiques comprend un amidon modifié comme la source d'hydrate de carbone, et une teneur de l'amidon modifié dans l'aliment pour animaux domestiques est 3% en poids ou plus.

**7.** Aliment pour animaux domestiques selon l'une quelconque des revendications 1 à 6, comprenant en outre (F) une protéine animale ou végétale.

**8.** Aliment pour animaux domestiques selon la revendication 7, dans lequel la protéine animale est une protéine de viande animale.

Fig. 1

Postprandial time (Hr)

Test Example 2
Test Example 1

Fig. 2

Fig. 3

**REFERENCES CITED IN THE DESCRIPTION**

**Patent documents cited in the description**

- JP 5192092 A
- JP 9187230 A
- JP 8038069 A
- JP 10279487 A
- JP 2005095174 A
- JP 2002510474 A
- JP 6217710 A
- JP 2005204659 A
- JP 2004510740 A
- JP 2004529910 A
- JP 2003509074 A
- US 2004101545 A1
- EP 1514480 A